# FASCICULE DE BREVET EUROPEEN

(11) **EP 3 457 167 B1**
(45) Date de publication et mention de la délivrance du brevet: **15.06.2022**
(21) Numéro de dépôt: 18190782.5
(22) Date de dépôt: 24.08.2018
(51) Int. Cl.: G01S 7/41, G01S 13/524

(54) **PROCEDE DE FILTRAGE DES ECHOS DE FOUILLIS DE SOL ET/OU DE MER INTERCEPTES PAR UN RADAR AEROPORTE, ET RADAR METTANT EN OEUVRE UN TEL PROCEDE**
FILTERVERFAHREN DER BODEN- UND/ODER SEE-STÖRECHOS, DIE VON EINEM RADAR AN BORD EINES FLUGGERÄTS AUFGEFANGEN WERDEN, UND RADAR ZUR UMSETZUNG EINES SOLCHEN VERFAHRENS
METHOD FOR FILTERING GROUND AND/OR SEA CLUTTER ECHOES RECEIVED BY AN AIRBORNE RADAR, AND RADAR IMPLEMENTING SUCH A METHOD

(30) Priorité: 14.09.2017 FR 1700931
(43) Date de publication de la demande: 20.03.2019
(73) Titulaire: Thales, 92400 Courbevoie (FR)
(72) Inventeur: CORRETJA, Vincent, 33700 MERIGNAC (FR); JOSEPH, Bernard, 33700 MERIGNAC (FR); COTTRON, Rodolphe, 33700 MERIGNAC (FR); GOY, Philippe, 33700 MERIGNAC (FR)
(74) Mandataire: Marks & Clerk France

(56) Documents cités:
- EP-A1- 3 213 112
- US-A- 5 416 488
- US-B1- 8 717 230
- US-B1- 8 947 294

## Description

La présente invention concerne un procédé d'amélioration de filtrage dans une chaîne de réception radar des échos de fouillis de sol et/ou de mer interceptés par les lobes secondaires selon l'axe élévation d'un radar aéroporté. L'invention concerne également un radar apte à mettre en œuvre un tel procédé.

L'invention s'applique notamment pour les radars aéroportés de surveillance de cibles aériennes ou terrestres.

Dans le domaine de la surveillance des cibles aériennes ou terrestres, un problème technique à résoudre est la re-sensibilisation des modes de détection air/air et sol/air ou GMTI (Ground Moving Target Indicator) en combinaison avec la maîtrise du taux de fausses alarmes. On entend par « re-sensibilisation » le fait de recouvrer totalement ou en partie un niveau de sensibilité perdu correspondant à une désensibilisation.

Dans les modes de détection air/air et GMTI, la terre est un élément perturbateur. En effet lorsque les lobes secondaires de l'antenne interceptent le sol, la puissance du fouillis (encore appelée « clutter ») de terre est suffisamment importante pour générer des faux échos secondaires, ces échos secondaires correspondant au fouillis capté par les lobes secondaires en élévation. Ce fouillis vient alors perturber la détection, entraînant notamment :
- une non-maîtrise du taux de fausse alarme, en raison des fausses alarmes générées par les faux échos secondaires ;
- une augmentation de la charge de calcul inutile due à la création de pistes de poursuites « factices » initialisées par les fausses détections des lobes secondaires ;
- et une situation tactique confuse, résultant notamment des deux points précédents.

De plus, le fouillis de terre influence le seuil de détection et désensibilise alors la détection des cibles aériennes et terrestres. En effet, le filtrage des échos secondaires pour stabiliser le taux de fausses alarmes constant est réalisé en augmentant les seuils de détection, au prix d'une réduction de sensibilisation du radar en terme de détection, ou désensibilisation du radar. Le seuil de détection n'est ainsi plus optimisé pour la détection de petites cibles, plus précisément pour des cibles de faibles SER (Surface Equivalente Radar).

En d'autres termes, le clutter de terre ou de mer impose d'augmenter le seuil de détection et désensibilise ainsi la détection de cibles aériennes et terrestres, il s'ensuit :
- une non-détection des cibles de faibles SER évoluant dans le domaine vitesse du fouillis de terre, au rang d'ambiguïté de la vitesse près ;
- une probabilité de détection dégradée de cibles de faibles SER proche du domaine vitesse du fouillis de terre (ou de mer), à ce rang d'ambiguïté vitesse près.

Des solutions de l'art antérieur tentent de surmonter ce problème. Ces solutions portent sur l'amélioration du traitement de détection radar à partir d'informations *a priori.* La majorité d'entre elles concernent uniquement la détection de cibles maritimes ou terrestres.

En particulier, dans le document de X.-K. Fan et Y. Qu, « An Overview of Knowledge-Aided Clutter Mitigation Methods for Airborne Radar, » Chinese Journal of Electronics, Vol. 40, n°6, pp. 1199-1205, 2012, des informations a *priori* provenant d'autres sources que le radar sont utilisées pour la détection. Dans le document de E. Conte, A. De Maio, A. Farina et G. Foglia, « Design and Analysis of a Knowledge-Aided Radar Detector for Doppler Processing », IEEE Transactions on Aerospace and Electronic Systems, Vol. 42, n03, pp. 1058-1079, 2006, on utilise des modèles numériques de terrain comme information *a priori* afin d'optimiser les traitements de détection. Ensuite, des informations *a priori* sur la statistique du clutter rencontré peuvent être utilisées comme c'est le cas dans le document de H. Xie, J. Shi, H. Tian, B. Luan et P. Zhou, « Knowledge-Aided Bayesian Optimum Radar Detector », Proceedings of International Conférence on Computer Science and Information Technology, pp. 83-93, 2013, où la texture du clutter est supposée être distribuée selon une loi Gamma inverse. Dans le cadre de la détection de cibles aériennes et terrestres, une solution peut être de désactiver la fonction de détection sur l'ensemble du domaine vitesse (ou fréquence Doppler) du fouillis de terre, c'est-à-dire dans le domaine vitesse (ou fréquence Doppler) où le fouillis de terre se situe. On évite ainsi la détection des échos secondaires.

Un inconvénient de cette solution est qu'elle n'autorise aucune détection sur le domaine vitesse correspondant au fouillis de sol, en provoquant une entaille dans l'axe des vitesses détectées.

Le document US 8 717 230 B1 divulgue un procédé de traitement des échos de fouillis par annulation, consistant à utiliser deux voies de réception correspondant chacune à un faisceau d'antenne distinct, un faisceau pointé sur des sites élevés et un faisceau pointé sur des sites plus bas et traitant séparément les signaux reçus au travers des deux faisceaux.

Un but de l'invention est notamment, en plus de la maîtrise du taux de fausse alarme, de re-sensibiliser la chaîne de détection d'un radar aéroporté afin de détecter des cibles aériennes ou terrestres au plus près des zones de fouillis. A cet effet, l'invention a pour objet un procédé de filtrage dans une chaîne de réception radar des échos de fouillis de sol et/ou de mer interceptés par les lobes secondaires d'un radar aéroporté, lesdits échos étant captés dans le domaine distance-vitesse, ledit procédé comportant :
- une étape de réalisation d'un masque, dans le plan distance-vitesse, recouvrant la zone de détection des échos de fouillis de sol et/ou de mer captés par lesdits lobes secondaires, ladite zone étant déterminable par les paramètres d'antenne dudit radar, la forme d'onde émise par ledit radar et le contexte environnemental dudit radar, tous les points dudit plan distance-vitesse couverts par ledit masque étant affectés d'une caractéristique propre audit masque ;
- une étape de filtrage des échos reçus dans laquelle les échos couverts par ledit masque sont rejetés du traitement de réception radar.

Ladite caractéristique est par exemple une valeur binaire.

Les points non couverts par ledit masque sont par exemple affectés de la valeur binaire complémentaire.

Selon l'invention, les paramètres d'antennes étant le diagramme d'antenne et le dépointage de l'antenne, le contexte environnemental étant la position, l'attitude et la vitesse du porteur dudit radar, l'étape de réalisation dudit masque consistant à affecter les points dudit plan distance-vitesse de ladite caractéristique, ladite étape comporte les étapes suivantes :
- le diagramme d'antenne est échantillonné en élévation selon un pas d'échantillonnage angulaire donné, les échantillons obtenus correspondant au lobes principal et aux lobes secondaires dudit diagramme ;
- pour chaque échantillon :
   - on calcule la direction de pointage dans le repère de l'antenne en fonction des paramètres angulaires du dépointage d'antenne ;
   - on effectue un changement de repère pour exprimer la direction de pointage de l'antenne dans le repère NED (North/East/Down) dudit porteur, en fonction de la position, de l'attitude et de la vitesse dudit porteur, ainsi qu'en fonction du dépointage de l'antenne ;
   - on calcule la distance et la fréquence Doppler dudit échantillon à partir du repère NED en fonction des paramètres de la forme d'onde émise, ledit échantillon étant ainsi positionné dans le domaine distance/vitesse ;
   - on attribue ladite caractéristique audit échantillon du plan distance-vitesse s'il correspond à un lobe secondaire.

Dans une étape initiale, tous les points du domaine distance-vitesse sont par exemple affectés d'une valeur binaire, les points desdits échantillons correspondant aux lobes secondaires étant affectés de la valeur binaire complémentaire.

Dans un mode de mise en œuvre possible, la chaîne de détection comportant un traitement de compression d'impulsions, une transformée de Fourier et un traitement à taux de fausse alarme constant TFAC :
- les échos marqués par ladite caractéristique propre au masque ne sont pas pris en compte dans le traitement TFAC ;
- les éventuelles détections en sortie du TFAC correspondant à des échos marqués par ladite caractéristique sont rejetées.

Ledit procédé utilise par exemple un modèle numérique de terrain pour préciser l'altitude dans ledit contexte environnemental.

L'invention a également pour objet un radar apte à mettre en œuvreun tel procédé.

D'autres avantages et caractéristiques de l'invention apparaîtront à l'aide de la description qui suit, faite en regard de dessins annexés qui représentent :
- la figure 1, une représentation du clutter de sol rétrodiffusé par le lobe principal, les lobes secondaires et les lobes diffus en élévation, dans le domaine distance/vitesse ;
- la figure 2, une illustration du principe d'obtention d'un masque distance/vitesse utilisé par le procédé selon l'invention ;
- la figure 3, un exemple d'insertion dudit masque dans une chaîne de traitement de détection ;
- la figure 4, un exemple d'obtention dudit masque à partir de différents paramètres d'entrée, connus a priori ;
- les figures 5a et 5b, respectivement la représentation de la figure 1 et le masque projeté dans le domaine distance/vitesse correspondant.

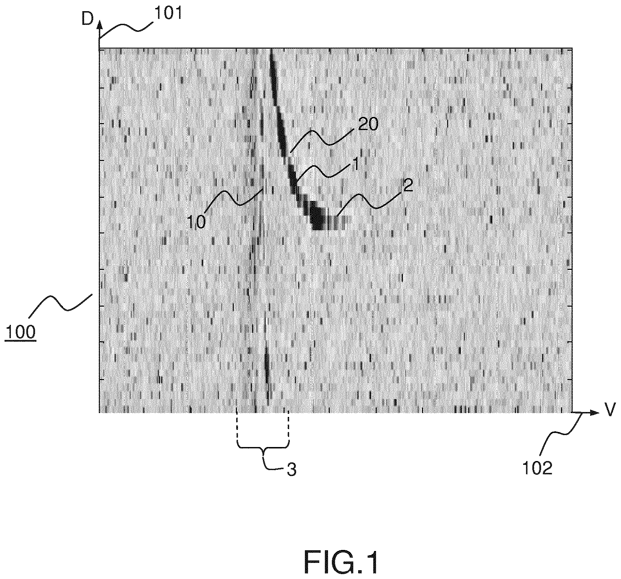

La figure 1 illustre la représentation, dans le domaine distance/vitesse 100, d'un exemple de bloc de données réelles. L'axe des ordonnées 101 représente les distances D et l'axe des abscisses 102 représente les vitesses V ou fréquences Doppler. On pourra employer par la suite indifféremment les termes de vitesse, fréquence Doppler ou Doppler.

Ces données correspondent à des échos captés en élévation sur plusieurs récurrences d'émission radar, ces échos peuvent correspondre à des cibles réelles ou à des échos secondaires.

Les échos captés, c'est-à-dire les signaux reçus dans la chaîne de réception du radar, sont comprimés par une compression d'impulsion classique. Puis une transformée de Fourier rapide (FFT) est appliquée pour chaque case distance sur l'horizon du bloc de données (sur lesdites récurrences) pour passer à une représentation en deux dimensions, plus précisément pour obtenir la représentation dans le domaine distance/vitesse 100 tel qu'illustré par exemple par la figure 1. Un écho est détecté selon son niveau de puissance dans le domaine distance/vitesse 100, la détection dépendant du seuil de détection retenu.

Sur la représentation de la figure 1, les zones 1 en noir et les zones 2 en gris représentent le fouillis de sol intercepté par les lobes secondaires en élévation. Classiquement, on voit ainsi une zone constituée de deux branches 10, 20 composées d'échos de lobes secondaires, donc de faux échos. Une première branche 10 est parallèle à l'axe des distances 101, elle est centrée sur la vitesse nulle ou sensiblement nulle, plus précisément sur une vitesse à égale à 0 m/s pour un clutter de terre et sur une vitesse de l'ordre de quelques mètres par secondes pour un clutter de mer. Une deuxième branche 20 s'éloigne de la première branche en forme de J inversé.

Le fouillis intercepté par les lobes secondaires, représentés dans ces branches 10, 20 produit des fausses alarmes. Une solution pour supprimer les échos de fouillis captés par les lobes secondaire peut consister à créer une entaille Doppler 3 dans laquelle on filtre toute détection. Cette bande Doppler 3 peut être comprise entre 0 et 30 m/s par exemple.

Cette solution est toutefois insatisfaisante car elle empêche toute détection dans cette bande Doppler 3 et désensibilise ainsi la détection. Par ailleurs, elle ne couvre pas la deuxième branche 20 et n'élimine pas la détection des échos secondaires correspondants.

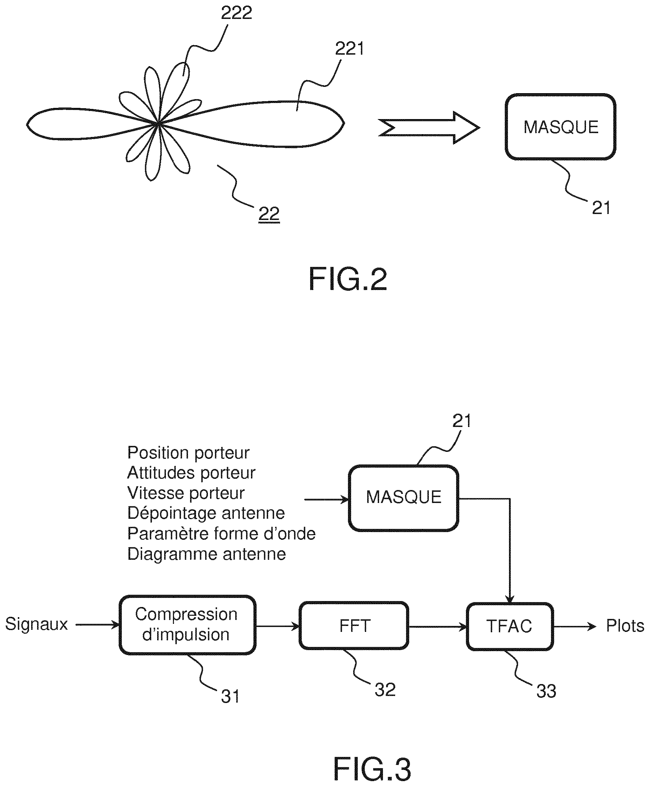

La figure 2 illustre le principe du procédé selon l'invention. Le procédé selon l'invention utilise la connaissance a priori du fouillis, de terre ou de mer, intercepté par le radar pour construire un masque distance/vitesse 21, ce masque étant destiné à filtrer les échos de lobes secondaires. Cette connaissance a priori du fouillis est obtenue à partir :
- des paramètres d'antennes :
   o le diagramme d'antenne 22 projeté dans le domaine distance/vitesse 100 en élévation ;
   o le dépointage d'antenne, mécanique ou électronique ;
- des paramètres de forme d'onde ;
- du contexte environnemental du radar, c'est-à-dire notamment de la position du porteur du radar, de l'attitude du porteur et de la vitesse du porteur.

Le diagramme d'antenne 22 est bien déterminé. Il est donc connu ou peut être calculé. Les paramètres de forme d'onde sont bien sûr également connus. Le dépointage d'antenne et le contexte environnemental est aussi connu tout au long de la mission. Les moyens de traitement radar peuvent donc prédire le fouillis de terre intercepté par les lobes secondaires 222 du diagramme d'antenne qui accompagnent le lobe principal 220, par exemple en prenant une hypothèse terre plate ou terre ronde. Le masque 21 est réalisé à partir de cette information de détection. Il est inséré dans la chaîne de détection pour :
- éliminer les échos parasites dues au fouillis de sol, interceptés par les lobes secondaires ;
- re-sensibiliser le traitement de détection pour les échantillons à proximité de ces échos parasites 10, 20 dans le domaine distance/vitesse.

La figure 3 présente un exemple d'insertion du masque dans une chaîne de traitement de détection, air-air ou air-sol, comportant classiquement un traitement de compression d'impulsion 31, une transformée de Fourier rapide 32 et un traitement à taux de fausse alarme constant 33 conduisant à l'élaboration de plots radar de façon connue de l'homme du métier. Les signaux reçus sont ainsi comprimés 31, puis la transformée de Fourier 32 (FFT) est appliquée pour chaque case distance sur l'horizon d'un bloc (formé sur plusieurs récurrences d'émission). En sortie de la FFT 32, on obtient une représentation des signaux reçus dans le domaine distance/vitesse 100 conformément à la représentation de la figure 1. L'opération de FFT 32 est suivie du traitement à taux de fausse alarme constant 33 (TFAC), ce traitement 33 appliquant un filtrage par le masque 21. Ce filtrage, décrit par la suite, a pour but d'éliminer les échos de lobes secondaires sans altérer la sensibilité de la détection.

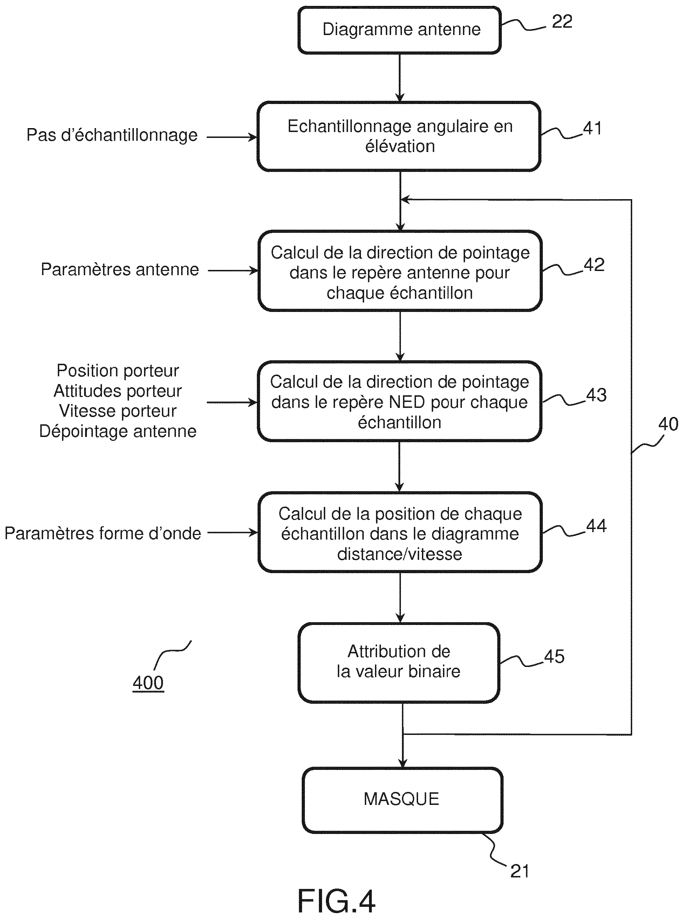

La figure 4 illustre l'étape 400 de réalisation du masque 21. Elle présente plus particulièrement un exemple d'obtention de ce masque 21. Ce masque est élaboré dans le domaine distance/vitesse 100. Il recouvre la zone de détection d'échos secondaires 10, 20. La fonction du masque est d'attribuer une valeur binaire à l'ensemble des points du domaine distance/vitesse concernés. Les points concernés sont l'ensemble des points du domaine de détection potentielle. Selon la valeur attribuée au point, on valide ou non la détection. En d'autres termes, si le niveau de puissance reçue en un point du domaine distance/vitesse dépasse le seuil de détection retenu, la détection est validée selon la valeur binaire du point définie par le masque.

En regard de la figure 4, on décrit ci-après les étapes possibles d'obtention du masque.

Dans une première étape, le masque 21 est initialisé à 1 pour l'ensemble des points du domaine distance/vitesse.

Le diagramme d'antenne 22 est échantillonné en élévation 41 selon un pas d'échantillonnage angulaire donné. Ce pas est par exemple égal à 0,01°. Les échantillons obtenus correspondent au lobe principal 221 et aux lobes secondaires 222, en référence à la figure 2.

Pour tous les points du diagramme d'antenne en élévation, plus précisément pour chaque échantillon :
- on calcule 42 la direction de pointage dans le repère de l'antenne en fonction des paramètres angulaires du dépointage d'antenne ;
- on effectue 43 le changement de repère pour exprimer la direction de pointage de l'antenne dans le repère NED (North/East/Down) du porteur, en fonction de la position, de l'attitude et de la vitesse du porteur, ainsi qu'en fonction du dépointage de l'antenne ;
- on calcule 44 la distance et la fréquence Doppler de l'échantillon à partir du repère NED en fonction des paramètres de la forme d'onde émise, l'échantillon est ainsi positionné dans le domaine distance/vitesse 100 ;
- dans une dernière étape 45, on attribue la valeur binaire du point calculé en fonction de la position de l'échantillon dans le diagramme d'antenne (lobe principal ou lobes secondaires projetés dans le plan distance-vitesse ), plus précisément on force à 0 la valeur du point distance/vitesse du domaine 100, correspondant à la position calculée de l'échantillon si ce dernier appartient à un lobe secondaire, donc susceptible de générer un faux écho.

Une fois que ce point du masque est calculé, on recommence 40 les étapes pour l'échantillon suivant, et ainsi de suite jusqu'à ce que l'ensemble des échantillons soit parcouru.

Le calcul du masque est renouvelé tout au long de la mission du radar pour tenir compte notamment de l'évolution du contexte environnemental du porteur. L'étape 400 de calcul du masque est par exemple effectuée après chaque rafale de récurrences radar et avant le traitement dans la chaîne de réception 31, 32, 33.

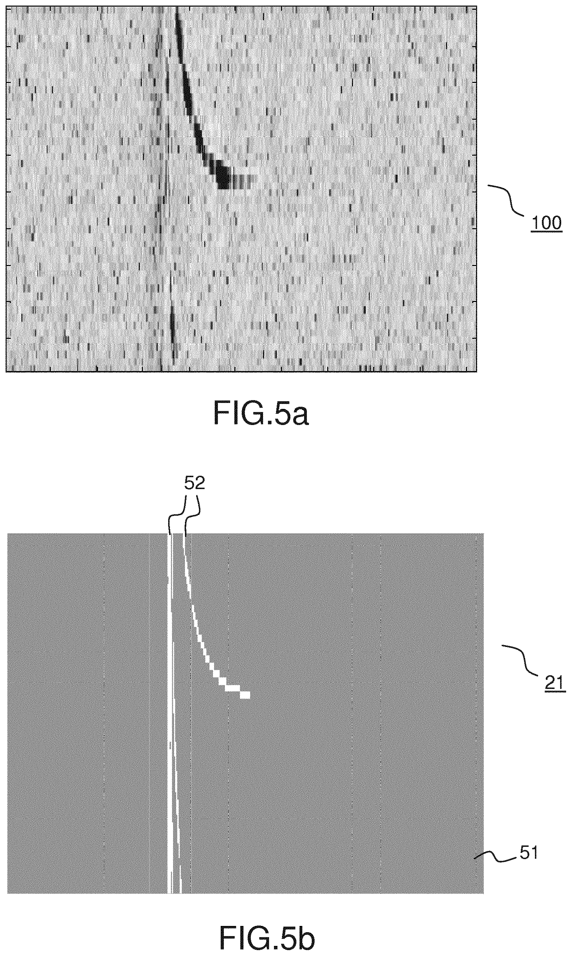

La figure 5b illustre le masque 21 obtenu en regard du domaine distance/vitesse 100 repris dans la figure 5a.

La partie en gris 51 représente la valeur 1 et la partie en blanc 52 représente la valeur 0. La zone en blanc 52 se superpose aux branches 10, 20 de fouillis intercepté par les lobes secondaires. Cette zone 52 épouse ainsi la forme de la zone de détection des échos secondaires. Elle forme le masque proprement dit.

Il est possible d'élargir cette zone de masquage 52 selon les deux dimensions distance et vitesse, plus précisément la zone masquée de valeur 0, pour tenir compte de l'étalement naturel du fouillis en distance et en vitesse. Cet élargissement permet par ailleurs d'effectuer un recalage du masque en fonction des imprécisions sur les paramètres d'entrées (position, attitude, vitesse du porteur notamment). Il est bien sûr possible d'établir une logique inverse en initialisant le masque à la valeur 0 et en attribuant la valeur 1 aux détections à filtrer.

La valeur binaire propre au masque attribuée à un point caractérise le fait que ledit point est couvert par ledit masque. Il est possible de prévoir une autre caractéristique qu'une valeur binaire.

Le masque 21 est utilisé dans la chaîne de réception pour le calcul du TFAC 33 comme mentionné précédemment. Il permet de filtrer les faux échos dus aux lobes secondaires et au fouillis, de sol ou de mer, de la façon suivante :
- les échantillons dont la valeur est à 0 sur le masque 21 (compris dans la zone de masquage 52) ne sont pas pris en compte dans le traitement TFAC ;
- les éventuelles détections en sortie du TFAC correspondant à des échantillons dont la valeur est à 0 sont rejetées.

Les échantillons, non masqués, dont la valeur est à 1 sont conservés pour le traitement de détection.

Ainsi, le traitement de détection ne prend pas en compte les échantillons masqués, ayant la valeur 0 sur le masque calculé dans le domaine distance/vitesse.

Les échantillons masqués ne sont pas testés. Cela permet avantageusement de diminuer le taux de fausse alarme et donc de maîtriser le TFAC.

Les échantillons masqués ne sont pas pris en compte pour le calcul du contraste de case distance/vitesse sous test avec le niveau moyen de bruit du voisinage, ce qui permet avantageusement de ne pas provoquer de désensibilisation dans la mesure de l'environnement. Les zones 10, 20 où le fouillis de sol est intercepté par les lobes secondaires en élévation ne sont pas prises en compte dans le calcul du seuil de détection dans le TFAC. On obtient ainsi une re-sensibilisation de la détection à proximité des zones de fouillis de sol.

En complément des paramètres d'entrées cités pour le calcul du masque, on peut ajouter un modèle numérique du terrain qui précise l'attitude du sol intercepté par le diagramme d'antenne. La projection dans le domaine distance/vitesse est ainsi plus précise en prenant en compte l'altitude du sol en plus des autres paramètres d'entrée déjà cités (attitude, position et vitesse du porteur, ...).

## Revendications

1. Procédé de filtrage dans une chaîne de réception radar des échos de fouillis de sol et/ou de mer interceptés par les lobes secondaires d'un radar aéroporté, lesdits échos étant captés dans le domaine distance-vitesse (100), ledit procédé étant **caractérisé en ce qu'**il comporte :
- une étape (400) de réalisation d'un masque (21, 52), dans le plan distance-vitesse, recouvrant la zone de détection (10, 20) des échos de fouillis de sol et/ou de mer captés par lesdits lobes secondaires, ladite zone (10, 20) étant déterminable par les paramètres d'antenne dudit radar, la forme d'onde émise par ledit radar et le contexte environnemental dudit radar, tous les points dudit plan distance-vitesse couverts par ledit masque étant affectés d'une caractéristique propre audit masque ;
- une étape de filtrage des échos reçus dans laquelle les échos couverts par ledit masque (21, 52) sont rejetés du traitement de réception radar ;
et **en ce que** les paramètres d'antennes étant le diagramme d'antenne (22) et le dépointage de l'antenne, le contexte environnemental étant la position, l'attitude et la vitesse du porteur dudit radar, l'étape (400) de réalisation dudit masque consistant à affecter les points dudit plan distance-vitesse de ladite caractéristique, ladite étape (400) comporte les étapes suivantes :
- le diagramme d'antenne (22) est échantillonné en élévation (41) selon un pas d'échantillonnage angulaire donné, les échantillons obtenus correspondant au lobes principal (221) et aux lobes secondaires (222) dudit diagramme ;
- pour chaque échantillon :
- on calcule (42) la direction de pointage dans le repère de l'antenne en fonction des paramètres angulaires du dépointage d'antenne ;
- on effectue (43) un changement de repère pour exprimer la direction de pointage de l'antenne dans le repère NED, North/East/Down, dudit porteur, en fonction de la position, de l'attitude et de la vitesse dudit porteur, ainsi qu'en fonction du dépointage de l'antenne ;
- on calcule (44) la distance et la fréquence Doppler dudit échantillon à partir du repère NED en fonction des paramètres de la forme d'onde émise, ledit échantillon étant ainsi positionné dans le domaine distance/vitesse (100) ;
- on attribue (45) ladite caractéristique audit échantillon du plan distance-vitesse s'il correspond à un lobe secondaire.

2. Procédé selon la revendication 1, **caractérisé en ce que** ladite caractéristique est une valeur binaire.

3. Procédé selon la revendication 2, **caractérisé en ce que** les points non couverts (51) par ledit masque sont affectés de la valeur binaire complémentaire.

4. Procédé selon la revendication 1, **caractérisé en ce que** dans une étape initiale, tous les points du domaine distance-vitesse sont affectés d'une valeur binaire, les points desdits échantillons correspondant aux lobes secondaires étant affectés de la valeur binaire complémentaire.

5. Procédé selon l'une quelconque des revendications précédentes, **caractérisé en ce que** ladite chaîne de détection comportant un traitement de compression d'impulsions (31), une transformée de Fourier (32) et un traitement à taux de fausse alarme constant TFAC (33) :
- les échos marqués par ladite caractéristique propre au masque ne sont pas pris en compte dans le traitement TFAC ;
- les éventuelles détections en sortie du TFAC correspondant à des échos marqués par ladite caractéristique sont rejetées.

6. Procédé selon l'une quelconque des revendications précédentes, **caractérisé en ce qu'**il utilise un modèle numérique de terrain pour préciser l'altitude dans ledit contexte environnemental.

7. Radar, **caractérisé en ce qu'**il est adapté à mettre en œuvre le procédé selon l'une quelconque des revendications précédentes.

## Patentansprüche

1. Filterverfahren, in einer Radarempfangskette, der Boden- und/oder Meer-Störechos, welche durch die Sekundärkeulen eines an Bord eines Flugzeugs mitgeführten Radars abgefangen werden, wobei die Echos im Abstands-Geschwindigkeitsbereich (100) erfasst werden, wobei das Verfahren **dadurch gekennzeichnet ist, dass** es Folgendes aufweist:
- einen Schritt (400) der Herstellung einer Maske (21, 52), in der Abstands-Geschwindigkeitsebene, welche den Detektionsbereich (10, 20) der Boden- und/oder Meer-Störechos überlagert, welche durch die Sekundärkeulen erfasst werden, wobei der Bereich (10, 20) durch die Antennenparameter des Radars, die durch den Radar ausgesendeten Wellenform und den Umgebungskontext des Radars bestimmt werden kann, wobei allen Punkten der Abstands-Geschwindigkeitsebene, welche durch die Maske abgedeckt sind, ein Eigenmerkmal der Maske zugewiesen ist;
- einen Schritt des Filtems der empfangenen Echos, wobei die durch die Maske (21, 52) abgedeckten Echos aus der Verarbeitung des Radarempfangs unterdrückt werden;
und dadurch, dass, da die Antennenparameter das Antennendiagramm (22) und die Fehlausrichtung der Antenne sind, der Umgebungskontext die Position, die Fluglage und die Geschwindigkeit des Trägers des Radars ist, der Schritt (400) der Herstellung der Maske darin besteht, die Punkte der Abstands-Geschwindigkeitsebene des Merkmals zuzuweisen, wobei der Schritt (400) folgende Schritte umfasst:
- das Antennendiagramm (22) wird in Bezug auf die Höhe (41) mit einem gegebenen Winkel-Abtastintervall abgetastet, wobei die erzielten Abtastwerte der Hauptkeule (221) und den Sekundärkeulen (222) des Diagramms entsprechen;
- für jeden Abtastwert:
- wird die Ausrichtungsrichtung im Koordinatensystem der Antenne angesichts der Winkelparameter der Antennen-Fehlausrichtung berechnet (42);
- wird eine Änderung des Koordinatensystems durchgeführt (43), um die Ausrichtungsrichtung der Antenne im NED-, North/East/Down-, Koordinatensystem des Trägers auszudrücken, angesichts der Position, der Fluglage und der Geschwindigkeit des Trägers, sowie angesichts der Fehlausrichtung der Antenne;
- wird der Abstand und die Dopplerfrequenz des Abtastwertes anhand des NED-Koordinatensystems angesichts der Parameter der ausgesandten Wellenform berechnet (44), wodurch der Abtastwert in dem Abstands-/Geschwindigkeitsbereich (100) positioniert wird;
- wird das Merkmal dem Abtastwert der Abstands-Geschwindigkeitsebene zugewiesen (45), wenn er einer Sekundärkeule entspricht.

2. Verfahren nach Anspruch 1, **dadurch gekennzeichnet, dass** das Merkmal ein binärer Wert ist.

3. Verfahren nach Anspruch 2, **dadurch gekennzeichnet, dass** den nicht durch die Maske abgedeckten (51) Punkten der komplementäre binäre Wert zugewiesen wird.

4. Verfahren nach Anspruch 1, **dadurch gekennzeichnet, dass**, in einem Anfangsschritt, allen Punkten des Abstands-Geschwindigkeitsbereichs ein binärer Wert zugewiesen wird, wobei den Punkten der den Sekundärkeulen entsprechenden Abtastwerte der komplementäre binäre Wert zugewiesen wird .

5. Verfahren nach einem der vorhergehenden Ansprüche, **dadurch gekennzeichnet, dass**, da die Detektionskette eine Impuls-Kompressionsverarbeitung (31), eine FourierTransformation (32) und eine Verarbeitung mit konstanter Fehlalarmrate TFAC (33) aufweist:
- die durch das Eigenmerkmal der Maske markierten Echos werden bei der TFAC-Verarbeitung nicht berücksichtigt;
- die eventuellen Detektionen am Ausgang der TFAC, welche Echos entsprechen, welche durch das Merkmal markiert sind, werden unterdrückt.

6. Verfahren nach einem der vorhergehenden Ansprüche, **dadurch gekennzeichnet, dass** es ein digitales Modell des Geländes verwendet, um die Höhe in dem Umgebungskontext zu spezifizieren.

7. Radar, **dadurch gekennzeichnet, dass** er in der Lage ist, das Verfahren nach einem der vorhergehenden Ansprüche umzusetzen.

## Claims

1. A method of filtering in a radar reception chain of the ground and/or sea clutter echoes intercepted by the sidelobes of an airborne radar, said echoes being picked up in the distance-speed domain (100), said method being **characterised in that** it has:
- a step (400) of producing a mask (21, 52), in the distance-speed plane, overlying the zone of detection (10, 20) of the ground and/or sea clutter echoes picked up by said sidelobes, said zone (10, 20) being determinable by the antenna parameters of said radar, the waveform emitted by said radar and the environmental context of said radar, all the points of said distance-speed plane which are covered by said mask being assigned a characteristic which is specific to said mask;
- a step of filtering the received echoes, in which the echoes covered by said mask (21, 52) are rejected from the radar reception processing;
and **in that** the antenna parameters being the antenna pattern (22) and the squint of the antenna, the environmental context being the position, the attitude and the speed of the carrier of said radar, step (400) of producing said mask consisting in assigning the points of said distance-speed plane of said characteristic, said step (400) has the following steps:
- the antenna pattern (22) is sampled in elevation (41) according to a given angular sampling interval, the samples obtained corresponding to the main lobe (221) and to the sidelobes (222) of said pattern;
- for each sample:
- the pointing direction is calculated (42) in the coordinate system of the antenna as a function of the angular parameters of the antenna squint;
- a change of coordinate system is performed (43) so as to express the pointing direction of the antenna in the NED (North/East/Down) coordinate system of said carrier, as a function of the position, of the attitude and of the speed of said carrier, as well as a function of the squint of the antenna;
- the distance and the Doppler frequency of said sample is calculated (44) on the basis of the NED coordinate system as a function of the parameters of the emitted waveform, said sample thus being positioned in the distance/speed domain (100);
- said characteristic is allocated (45) to said sample of the distance-speed plane if it corresponds to a sidelobe.

2. The method according to claim 1, **characterised in that** said characteristic is a binary value.

3. The method according to claim 2, **characterised in that** the points not covered (51) by said mask are assigned the complementary binary value.

4. The method according to claim 1, **characterised in that**, in an initial step, all the points of the distance-speed domain are assigned a binary value, the points of said samples corresponding to the sidelobes being assigned the complementary binary value.

5. The method according to any one of the preceding claims, **characterised in that** said detection chain has a pulse compression processing (31), a Fourier transform (32) and a processing with constant false alarm rate CFAR (33):
- the echoes marked by said characteristic specific to the mask are not taken into account in the CFAR processing;
- potential output detections from the CFAR corresponding to echoes marked by said characteristic are rejected.

6. The method according to any one of the preceding claims, **characterised in that** it uses a digital terrain model to specify the altitude in said environmental context.

7. A radar, **characterised in that** it is able to implement the method according to any one of the preceding claims.
